# EUROPEAN PATENT APPLICATION

(11) **EP 3 190 674 A1**
(43) Date of publication of application: **12.07.2017**
(21) Application number: 17150947.4
(22) Date of filing: 11.01.2017
(51) Int. Cl.: H02G 15/064

(54) **POWER CABLE TERMINAL**

(30) Priority: 11.01.2016 CN 201610014819
(71) Applicant: Tyco Electronics (Shanghai) Co. Ltd., Shanghai Guangdong (CN)
(72) Inventor: TAN, Yuezhong, Shanghai (CN); SHEN, Xialin, Shanghai (CN); MENG, Jianzhong, Shanghai (CN); YANG, Lizhang, Shanghai (CN)
(74) Representative: Grünecker Patent- und Rechtsanwälte PartG mbB

(57) **Abstract**

There is disclosed a power cable terminal including: an insulation tube (100) having a first end and a second end opposite to the first end; a stress control cone (200) received in the insulation tube (100); a base (400, 500, 600) connected to the first end of the insulation tube (100) and having a cylindrical part (400) extending into the insulation tube (100); and a connection device (300) configured to connect the stress control cone (200) to the cylindrical part (400) of the base (400, 500, 600), wherein the connection device (300) is adapted to tightly press an end face of the stress control cone (200) against an end face (401) of the cylindrical part (400), so that the end face (201) of the stress control cone (200) is hermetically engaged to the end face (401) of the cylindrical part (400). Thereby, it conveniently achieves the tight connection between the stress control cone (200) and the cylindrical part (400).

## Description

### CROSS-REFERENCE TO RELATED APPLICATION

This application claims the benefit of Chinese Patent Application No.CN201610014819.2 filed on January 11, 2016 in the State Intellectual Property Office of China, the whole disclosure of which is incorporated herein by reference.

### BACKGROUND OF THE INVENTION

### Field of the Invention

Embodiments of the present invention relate to a power cable terminal.

### Description of the Related Art

With the development of electric power construction, the demand of high-voltage power cable is increased, and the power cable terminal which is matched with the power cable has been widely used. In the prior art, the power cable terminations typically include an insulation tube, a stress control cone and a base. The stress control cone is received in the insulation tube and adapted to be sleeved over a semiconductor layer of a power cable inserted into the insulation tube, so as to prevent local discharge on the power cable. The base is connected to the end of the insulation tube, and the stress control cone is connected to the base.

In the prior art, in order to improve the insulation effect, it is sometimes necessary to fill the insulation tube with an insulation oil. In this case, the stress control cone and the base arc hermetically connected to each other. In the prior art, the stress control cone and the base are generally hermetically connected together by winding a tape around the peripheries of the stress control cone and the base. However, the tape is prone to aging, resulting in unreliable sealing, and the sealing operation of winding is very time-consuming, resulting in inconvenient installation.

### SUMMARY OF THE INVENTION

The present invention has been made to overcome or alleviate at least one aspect of the above mentioned problems and disadvantages.

According to an object of the present invention, there is provided a power cable terminal for enabling reliable and hermetically connection between a stress control cone and a base.

According to an aspect of the present invention, there is provided power cable terminal, comprising: an insulation tube having a first end and a second end opposite to the first end; a stress control cone received in the insulation tube; a base connected to the first end of the insulation tube and having a cylindrical part extending into the insulation tube; and a connection device configured to connect the stress control cone to the cylindrical part of the base, wherein the connection device is adapted to tightly press an end face of the stress control cone against an end face of the cylindrical part, so that the end face of the stress control cone is hermetically engaged to the end face of the cylindrical part.

According to an exemplary embodiment of the present invention, wherein the connection device comprises threaded connection parts, which connect the stress control cone and the cylindrical part and pull them toward each other, so that the end face of the stress control cone is tightly pressed against the end face of the cylindrical par.

According to another exemplary embodiment of the present invention, the connection device further comprises a connection flange sleeved on around an outer wall of an end of the stress control cone and engaged to the stress control cone; wherein the connection flange is connected to the cylindrical part by means of the threaded connection parts bolts, so as to connect the stress control cone to the cylindrical part.

According to another exemplary embodiment of the present invention, a recess is formed in the outer wall of the end of the stress control cone, and the connection flange has a protruding lip protruding toward inside and adapted to be engaged in the recess.

According to another exemplary embodiment of the present invention, the connection device further comprises a support tube provided inside the end of the stress control cone, so as to support an inner wall of the stress control cone.

According to another exemplary embodiment of the present invention, wherein the base further comprises a base plate provided at an opening of the insulation tube at the first end thereof and a flange connected to the outer wall of the first end of the insulation tube; wherein an end of the cylindrical part far away from the stress control cone is connected to the base plate, and the flange is connected to the base plate.

According to another exemplary embodiment of the present invention, wherein the stress control cone comprises an insulation layer and a semiconductor layer provided on an inner side of the insulation layer; wherein the stress control cone is configured to be sleeved around a semiconductor layer of a power cable inserted through an opening of the first end of the insulation tube, so as to prevent local discharge on the power cable.

According to another exemplary embodiment of the present invention, the power cable terminal further comprises a connection bar with one end inserted into the insulation tube through an opening of the second end of the insulation tube and the other end located outside the insulation tube, wherein the one end of the connection bar inserted into the insulation tube is adapted to be crimped on a conductor core of the power cable inserted into the insulation tube.

According to another exemplary embodiment of the present invention, the power cable terminal further comprises a shielding cap connected to the outer wall of the second end of the insulation tube and sleeved around the connection bar, so as to prevent local discharge on the connection bar.

According to another exemplary embodiment of the present invention, wherein the power cable terminal is adapted to be mounted on a support frame, wherein the power cable terminal further comprises a ceramic insulation gasket provided between the base plate and the support frame, so as to electrically isolate the power cable terminal from the support frame.

According to another exemplary embodiment of the present invention, an insulation medium is filled in an interior space of the insulation tube.

According to another exemplary embodiment of the present invention, an insulation gas or an insulation liquid is filled in the interior space of the insulation tube.

According to another exemplary embodiment of the present invention, a umbrella skirt formed on the outer wall of the insulation tube.

In the above various exemplary embodiments of the present invention, the connection device is adapted to tightly press a lower end face of the stress control cone against an upper end face of the cylindrical part, so that the lower end face of the stress control cone is hermetically engaged to the upper end face of the cylindrical part. Thereby, it conveniently achieves the tight connection between the stress control cone and the cylindrical part.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative structural diagram of a power cable terminal according to an exemplary embodiment of the present invention;
Fig.2 is an illustrative structural diagram of a stress control cone and a connection device for connecting the stress control cone to a base of the power cable terminal of Fig.1;
Fig.3 is an illustrative structural diagram of the stress control cone, the connection device installed on the stress control cone and a cylindrical part of the base of the power cable terminal of Fig.1, wherein the stress control cone is separated from the cylindrical part; and
Fig.4 is an illustrative structural diagram of the stress control cone, the connection device installed on the stress control cone and the cylindrical part of the base of the power cable terminal of Fig.1, wherein the stress control cone is connected to the cylindrical part.

### DETAILED DESCRIPTION OF PREFERRED EMBODIMENTS OF THE INVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a power cable terminal, comprising: an insulation tube having a first end and a second end opposite to the first end; a stress control cone received in the insulation tube; a base connected to the first end of the insulation tube and having a cylindrical part extending into the insulation tube; and a connection device configured to connect the stress control cone to the cylindrical part of the base, wherein the connection device is adapted to tightly press an end face of the stress control cone against an end face of the cylindrical part, so that the end face of the stress control cone is hermetically engaged to the end face of the cylindrical part.

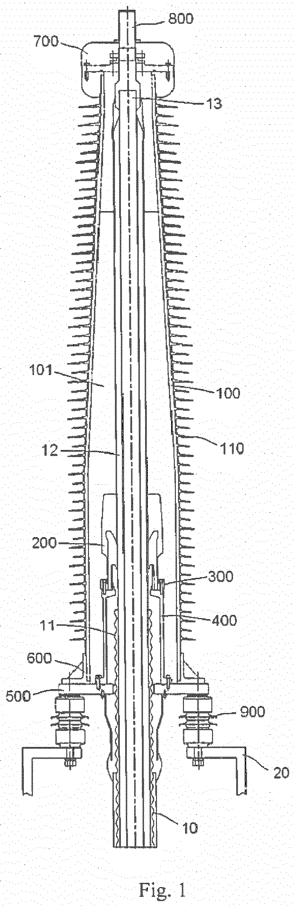

Fig.1 is an illustrative structural diagram of a power cable terminal according to an exemplary embodiment of the present invention.

In an embodiment of the present invention, a power cable terminal is disclosed. And as shown in Fig.1, the power cable terminal mainly comprises an insulation tube 100, a stress control cone 200, a connection device 300 and a base (400, 500, 600).

As shown in Fig.1, in an embodiment of the present invention, the insulation tube 100 has a first end (e.g., a bottom end, as shown in Fig. 1) and a second end (e.g., a top end, as shown in Fig. 1) opposite to the first end. The stress control cone 200 is received in the insulation tube 100. The base (400, 500, 600) is connected to the first end of the insulation tube 100 and the base (400, 500, 600) has a cylindrical part 400 extending into the insulation tube 100. And the connection device 300 is configured to connect the stress control cone 200 to the cylindrical part 400 of the base (400, 500, 600).

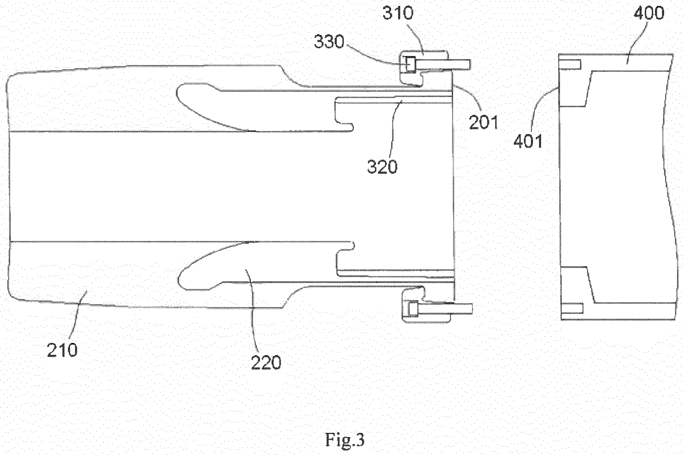

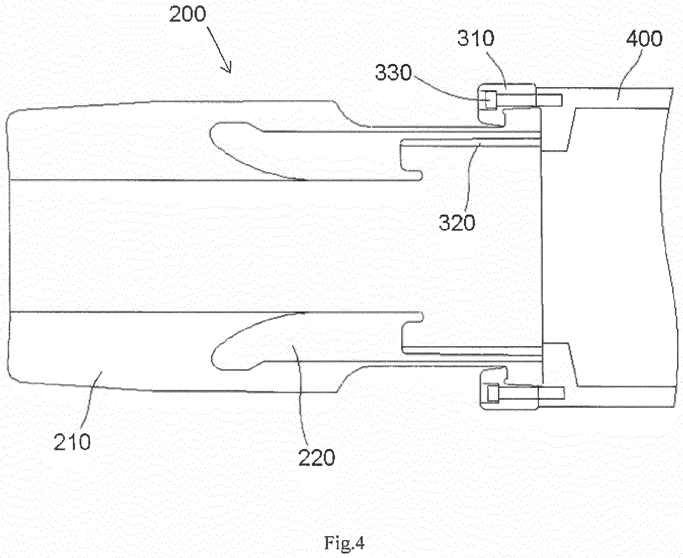

Fig.3 shows an illustrative structural diagram of the stress control cone 200, the connection device 300 installed on the stress control cone 200 and the cylindrical part 400 of the base of the power cable terminal of Fig.1, wherein the stress control cone 200 is separated from the cylindrical part 400; and Fig.4 shows an illustrative structural diagram of the stress control cone 200, the connection device 300 installed on the stress control cone 200 and the cylindrical part 400 of the base of the power cable terminal of Fig.1, wherein the stress control cone 200 is connected to the cylindrical part 400.

As shown in Figs. 1, 3 and 4, according to an exemplary embodiment of the present invention, the connection device 300 is adapted to tightly press an end face 201 (e.g., a lower end face when viewed in Fig. 1) of the stress control cone 200 against an end face 401 (e.g., an upper lower end face when viewed in Fig. 1) of the cylindrical part 400, so that the end face 201 of the stress control cone 200 is hermetically engaged to the end face 401 of the cylindrical part 400. Thereby, it conveniently achieves a reliable and hermetical connection between the stress control cone 200 and the cylindrical part 400.

As shown in Figs. 1, 3 and 4, according to an exemplary embodiment of the present invention, the connection device 300 includes threaded connection parts 330, the threaded connection parts 330 connect the stress control cone 200 and the cylindrical part 400 and pull them toward each other, so that the end face 201 of the stress control cone 200 is tightly pressed against the end face 401 of the cylindrical part 400.

In an embodiment of the present invention, the threaded connection parts 300 may be screws or bolts.

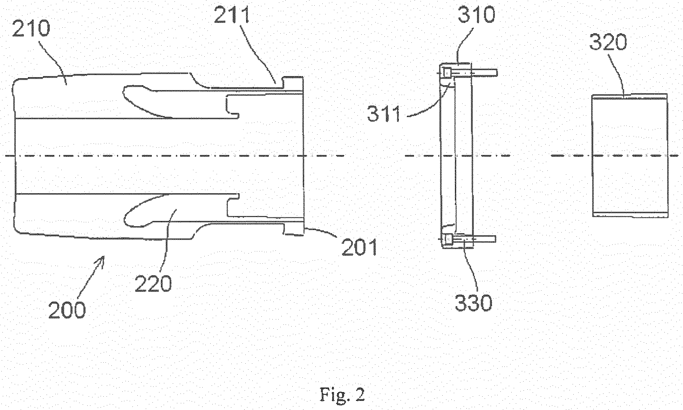

Fig.2 is an illustrative structural diagram of the stress control cone 200 and the connection device 300 for connecting the stress control cone 200 to the base of the power cable terminal of Fig.1.

In the embodiments shown in Figs. 2, 3 and 4, the connection device 300 further includes a connection flange 310 sleeved or fitted around an outer wall of an end of the stress control cone 200 located near the cylindrical part 400 and engaged to the stress control cone 200. And the connection flange 310 is connected to the cylindrical part 400 by means of the threaded connection parts 330, so as to connect the stress control cone 200 to the cylindrical part 400.

In the embodiments shown in Figs.2, 3 and 4, a recess 211 is formed in the outer wall of the end of the stress control cone 200, the connection flange 310 has a protruding lip 311 protruding toward inside and adapted to be engaged in the recess 211.

In the embodiments shown in Figs. 2, 3 and 4, the connection device 300 further includes a support tube 320 provided inside the end of the stress control cone 200, so as to support an inner wall of the stress control cone 200.

As shown in Fig.1, according to an exemplary embodiment of the present invention, the base (400, 500, 600) further includes a base plate 500 provided at an opening of the insulation tube 100 at the first end thereof and a flange 600 connected to the outer wall of the first end of the insulation tube 100. Wherein an end of the cylindrical part 400 far away from the stress control cone 200 is connected to the base plate 500, and the flange 600 is connected to the base plate 500.

In the embodiments shown in Figs.2, 3 and 4, the stress control cone 200 includes an insulation layer 210 and a semiconductor layer 220 provided inside the insulation layer 210; As shown in Fig.1, the stress control cone 200 is configured to be sleeved around or fitted over a semiconductor layer 12 of a power cable 10 inserted through the opening of the first end of the insulation tube 100, so as to prevent local discharge on the power cable 10.

In the shown embodiment, as shown in Fig.1, in general the power cable 10 includes a conductor core 13, an insulation layer wrapped around the conductor core 13, a semiconductor layer 12 wrapped around the insulation layer and a shield sleeve layer 11 wrapped around the semiconductor layer 12.

As shown in Fig.1, according to an exemplary embodiment of the present invention, the power cable terminal further includes a connection bar 800 with one end inserted into the insulation tube 100 through an opening of the second end of the insulation tube 100 and the other end located outside the insulation tube 100, wherein the one end of the connection bar 800 inserted into the insulation tube 100 is adapted to be crimped on the conductor core 13 of the power cable 10 inserted into the insulation tube 100, so as to electrically connect to the conductor core 13 of the power cable 10.

As shown in Fig.1, according to an exemplary embodiment of the present invention, the power cable terminal further includes a shielding cap 700 connected to the outer wall of the second end of the insulation tube 100 and sleeved around or fitted over the connection bar 800, so as to prevent local discharge on the connection bar 800.

As shown in Fig.1, according to an exemplary embodiment of the present invention, the power cable terminal is adapted to be mounted on a support frame 20, so as to overhead lay the power cable 10.

As shown in Fig.1, in the shown embodiment, the power cable terminal further includes a ceramic insulation gasket 900 provided between the base plate 500 and the support frame 20, so as to electrically isolate the power cable terminal from the support frame 20.

As shown in Fig.1, according to an exemplary embodiment of the present invention, an insulation medium may be filled in a hollow interior space 101 of the insulation tube 100.

As shown in Fig.1, according to an exemplary embodiment of the present invention, an insulation gas or an insulation liquid may be filled in the inner space 101 of the insulation tube 100.

As shown in Fig.1, according to an exemplary embodiment of the present invention, umbrella skirts 110 are formed on the outer wall of the insulation tube 100, so as to increase a creepage distance of the insulation tube 100.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A power cable terminal, comprising:
an insulation tube (100) having a first end and a second end opposite to the first end;
a stress control cone (200) received in the insulation tube (100);
a base (400, 500, 600) connected to the first end of the insulation tube (100) and having a cylindrical part (400) extending into the insulation tube (100); and
a connection device (300) configured to connect the stress control cone (200) to the cylindrical part (400) of the base (400, 500, 600),
wherein the connection device (300) is adapted to tightly press an end face (201) of the stress control cone (200) against an end face (401) of the cylindrical part (400), so that the end face (201) of the stress control cone (200) is hermetically engaged to the end face (401) of the cylindrical part (400).

2. The power cable terminal according to claim 1, wherein the connection device (300) comprises threaded connection parts (330), which connect the stress control cone (200) and the cylindrical part (400) and pull them toward each other, so that the end face (201) of the stress control cone (200) is tightly pressed against the end face (401) of the cylindrical part (400).

3. The power cable terminal according to claim 2,
wherein the connection device (300) further comprises a connection flange (310) sleeved around an outer wall of an end of the stress control cone (200) and engaged to the stress control cone (200);
wherein the connection flange (310) is connected to the cylindrical part (400) by means of the threaded connection parts (330), so as to connect the stress control cone (200) to the cylindrical part (400).

4. The power cable terminal according to claim 3,
wherein a recess (211) is formed in the outer wall of the end of the stress control cone (200), and the connection flange (310) has a protruding lip (311) protruding toward inside and adapted to be engaged in the recess (211).

5. The power cable terminal according to claim 4,
wherein the connection device (300) further comprises a support tube (320) provided inside the end of the stress control cone (200), so as to support an inner wall of the stress control cone (200).

6. The power cable terminal according to claim 1,
wherein the base (400, 500, 600) further comprises a base plate (500) provided at an opening of the insulation tube (100) at the first end thereof and a flange (600) connected to the outer wall of the first end of the insulation tube (100);
wherein an end of the cylindrical part (400) far away from the stress control cone (200) is connected to the base plate (500), and the flange (600) is connected to the base plate (500).

7. The power cable terminal according to claim 1,
wherein the stress control cone (200) comprises an insulation layer (210) and a semiconductor layer (220) provided on an inner side of the insulation layer (210);
wherein the stress control cone (200) is configured to be sleeved around a semiconductor layer (12) of a power cable (10) inserted through an opening of the first end of the insulation tube (100), so as to prevent local discharge on the power cable (10).

8. The power cable terminal according to claim 7, further comprising:
a connection bar (800) with one end inserted into the insulation tube (100) through an opening of the second end of the insulation tube (100) and the other end located outside the insulation tube (100),
wherein the one end of the connection bar (800) inserted into the insulation tube (100) is adapted to be crimped on a conductor core (13) of the power cable (10) inserted into the insulation tube (100).

9. The power cable terminal according to claim 8, further comprising:
a shielding cap (700) connected to the outer wall of the second end of the insulation tube (100) and sleeved around the connection bar (800), so as to prevent local discharge on the connection bar (800).

10. The power cable terminal according to claim 6,
wherein the power cable terminal is adapted to be mounted on a support frame (20),
wherein the power cable terminal further comprises a ceramic insulation gasket (900) provided between the base plate (500) and the support frame (20), so as to electrically isolate the power cable terminal from the support frame (20).

11. The power cable terminal according to claim 1,
wherein an insulation medium is filled in an interior space (101) of the insulation tube (100).

12. The power cable terminal according to claim 11,
wherein an insulation gas or an insulation liquid is filled in the interior space (101) of the insulation tube (100).

13. The power cable terminal according to claim 1, further comprising:
a umbrella skirt (110) formed on the outer wall of the insulation tube (100).
